# EUROPÄISCHE PATENTSCHRIFT

(11) **EP 3 887 233 B1**
(45) Veröffentlichungstag und Bekanntmachung des Hinweises auf die Patenterteilung: **17.09.2025**
(21) Anmeldenummer: 19817173.8
(22) Anmeldetag: 29.11.2019
(51) Int. Cl.: B62D 49/00, B62D 53/08, B62D 53/12

(54) **FAHRERLOSES TRANSPORTFAHRZEUG SOWIE VERFAHREN ZUM BEWEGEN EINES SATTELAUFLIEGERS DURCH EIN FAHRERLOSES TRANSPORTFAHRZEUG**
DRIVERLESS TRANSPORT VEHICLE AND METHOD FOR MOVING A SEMI-TRAILER USING A DRIVERLESS TRANSPORT VEHICLE
VÉHICULE À GUIDAGE AUTOMATIQUE ET PROCÉDÉ POUR DÉPLACER UNE SEMI-REMORQUE AU MOYEN D'UN VÉHICULE À GUIDAGE AUTOMATIQUE

(30) Priorität: 30.11.2018 DE 102018130585
(43) Veröffentlichungstag der Anmeldung: 06.10.2021
(73) Patentinhaber: Bayerische Motoren Werke Aktiengesellschaft, 80809 München (DE)
(72) Erfinder: CLAUER, Dana, 80639 München (DE); PRÜGLMEIER, Marco, 80637 München (DE); IRRENHAUSER, Thomas, 80797 München (DE); ECKL, Josef, 94267 Prackenbach (DE); WITTICH, Fabian, 92274 Gebenbach (DE)
(86) Internationale Anmeldenummer: PCT/EP2019/083079
(87) Internationale Veröffentlichungsnummer: WO 2020/109548

(56) Entgegenhaltungen:
- EP-A1- 3 620 268
- CN-A- 105 966 177
- CN-A- 106 741 239
- CN-A- 108 839 725
- CN-C- 100 443 350
- CN-U- 207 424 675
- FR-A1- 2 938 812
- JP-B1- 4 553 267
- CLAUER DANA: "Konzepterstellung für die Implementierung automatisierter Warehouse on Wheels Prozesse mittels fahrerloser Transportsysteme am Beispiel des BMW Group Werks Leipzig.", DEUTSCHER LOGISTIK-KONGRESS, THESIS CONFERENCE, 1 January 2018 (2018-01-01), XP055906003, Retrieved from the Internet <URL:https://www.bvl.de/misc/filePush.php?mimeType=application/pdf&fullPath=/files/1951/2142/2346/2482/DLK18_C4-1_Clauer,_Dana_ohne_Videos_freigegeben.pdf> [retrieved on 20220328]

## Beschreibung

Es wird ein fahrerloses Transportfahrzeug zum Bewegen eines Sattelaufliegers angegeben. Weiterhin wird ein Verfahren zum Bewegen eines Sattelaufliegers durch ein fahrerloses Transportfahrzeug angegeben.

Fahrerlose Transportfahrzeuge umfassen häufig eine Plattform, auf welchen Ladegut platziert und bewegt werden kann. Darüber hinaus ist es bereits bekannt, an fahrerlose Transportfahrzeuge insbesondere kleinere Anhänger anzuhängen. Hierzu dient üblicher Weise ein Zugmaul am fahrerlosen Transportfahrzeug, an welchem eine Dechsel des Anhängers festgelegt werden kann. Derartige Gespanne kommen beispielsweise in Montagelinien zum Einsatz, bei denen Montageumfänge mittels des fahrerlosen Transportfahrzeugs zum Einsatzort gebracht werden.

Die CN 105 966 177 A stellt einen Logistikschlepper zur Verfügung. Der Logistikschlepper umfasst einen Schlepperkörper und einen Zugaufhängungsmechanismus, der am hinteren Ende des Schlepperkörpers angeordnet ist. Der Zugaufhängungsmechanismus umfasst eine feste Basis, eine Drehantriebsvorrichtung und eine Hubvorrichtung, wobei die Drehantriebsvorrichtung und die Hubvorrichtung an der festen Basis angeordnet sind. Ein Zughaken ist in der vertikalen Ebene an der Drehantriebsvorrichtung angelenkt. Die Hebevorrichtung dient zum Antrieb des Zughakens, damit dieser sich in der vertikalen Ebene bewegt. Die Drehantriebsvorrichtung dient zum Antrieb des Zughakens in der horizontalen Ebene. Der Bediener braucht nur den zu wendenden Logistikschlepper an einem bestimmten Ort zu platzieren, der Logistikschlepper kann automatisch den Materialversand abschließen, und das Personal an dem Ort, an dem der Logistikschlepper benötigt wird, kann das Material des Logistikschlepper direkt an dem bestimmten Ort abholen, so dass der Materialversand des Logistikschlepper bequemer, der Arbeitsaufwand gering und die Effizienz hoch ist.

Ferner bildet die "Konzeptdarstellung für die Implementierung automatisierter Warehouse on Wheels Prozesse mittels fahrerloser Transportsysteme am Beispiel des BMW Group Werks Leipzig" von Clauer Dana, veröffentlicht am 01. Januar 2018 beim Deutschen Logistik-Kongress einen Stand der Technik. In dieser Präsentation wird ein fahrerloses Transportfahrzeug gemäß dem Oberbegriff von Anspruch 1 beschrieben.

Nachteilig ist es bislang, dass gerade bei längeren Gespannen oder dergleichen Zugverbunden eine ausreichende Detektion von Hindernissen im gesamten Umgebungsbereich der Fahrzeuge sehr schwierig ist.

Es ist eine zu lösende Aufgabe zumindest einiger Ausführungsformen, ein fahrerloses Transportfahrzeug anzugeben, durch welches eine ausreichende Detektion von Hindernissen auch am hinteren Ende der Fahrzeuge ermöglicht ist. Eine weitere Aufgabe ist es, ein Verfahren zum Bewegen eines Sattelaufliegers durch ein fahrerloses Transportfahrzeug anzugeben.

Diese Aufgaben werden durch Gegenstände gemäß den unabhängigen Patentansprüchen gelöst. Vorteilhafte Ausführungsformen und Weiterbildungen des Gegenstandes gehen weiterhin aus den abhängigen Patentansprüchen, der nachfolgenden Beschreibung und aus den Zeichnungen hervor.

Ein hier beschriebenes fahrerloses Transportfahrzeug, welches auch als fahrerloses Transportsystem (FTS) oder als Automated Guided Vehicle (AGV) bezeichnet werden kann, weist einen Grundkörper, beispielsweise einen im Wesentlichen quaderförmigen Grundkörper, und einen vom Grundkörper abragenden Arm, insbesondere einen Teleskoparm auf. Der Arm, insbesondere der Teleskoparm weist an einem dem Grundkörper abgewandten Ende eine Umgebungserfassungseinrichtung auf. Mittels des Arms kann somit die Umgebungserfassungseinrichtung im Bereich des Anhängers, insbesondere des Sattelaufliegers, positioniert werden. Hierbei wird der Arm mit der daran angeordneten Umgebungserfassungseinrichtung vorzugsweise unterhalb des Aufbaus beziehungsweise des Rahmens des Anhängers/Sattelaufliegers angeordnet. Durch den Arm kann somit die Umgebungserfassungseinrichtung in einem hinteren Teil des Gespanns/Sattelzugs positioniert werden, so dass auch die Umgebung im Bereich des Anhängers/Sattelaufliegers (besser) detektiert werden kann. Somit können Hindernisse in der Nähe des Trailers erkannt und das autonom fahrende Gespann beziehungsweise der Sattelzug besser um diese herum navigiert werden. Dies ist beispielsweise insbesondere bei Rückwärtsfahrten von großem Vorteil, da das fahrerlose Transportsystem bei Hindernissen rechtzeitig eingreifen oder stoppen und somit gefährliche Situationen vermeiden kann.

Ist der Arm aufgrund der Länge des Anhängers/Sattelaufliegers recht lang ausgebildet, so ist es vorteilhaft, wenn dieser mittels von Rädern auf der Fahrbahn abgestützt ist beziehungsweise vorzugsweise im Bereich seines hinteren Endes verfahrbar abgestützt ist. Dabei müssen die Räder nicht zwingend am hinteren Ende des Arms angeordnet sein, jedoch ist dies aus statischen Gründen natürlich vorteilhaft. Bei langen Armen können theoretisch auch mehrere Räder über die Länge des Arms verteilt angeordnet vorgesehen sein.

Es ist der vom Grundkörper abragende Arm als Teleskoparm teleskopartig ausfahrbar ausgebildet und kann so beispielsweise bezüglich seiner Länge variabel verändert werden, sodass durch ein Ausfahren des Teleskoparms die Umgebungserfassungseinrichtung weiter vom Grundkörper des fahrerlosen Transportfahrzeugs entfernt wird. Das fahrerlose Transportfahrzeug weist also einen Teleskoparm auf, der am flächenbeweglichen fahrerlosen Transportfahrzeug befestigt und beispielsweise in axiale Richtung eines Trailers oder dergleichen Anhängers ausfahrbar ist. Durch den Teleskoparm wird bei länglichen Fahrzeugen die komplette Umgebung überwacht. Dies ist vor allem beim Rückwärtsfahren wichtig. Dadurch kann das FTS stoppen und so gefährliche Situationen vermeiden.

Anstelle eines teleskopartigen Verlängerns beziehungsweise Aus- und Einfahrens des Arms wären natürlich auch andere gängige Ausfahr- und Einfahrmechanismen durch Klappen, Schwenken oder dergleichen verfahren entsprechender Teile des Arms denkbar.

Ferner weist das fahrerlose Transportfahrzeug eine Mehrzahl von Sensoren zur Umgebungserfassung auf. Beispielsweise kann das fahrerlose Transportfahrzeug einen im Wesentlichen quaderförmigen Grundkörper aufweisen, an welchem zumindest vier Lasersensoren angeordnet sind. Es kann z.B. an vier verschiedenen Ecken bzw. Kanten des Grundkörpers des fahrerlosen Transportfahrzeugs jeweils mindestens ein Lasersensor zur Umfelderkennung angeordnet sein. Zudem weist das fahrerlose Transportfahrzeug in weiterer Ausgestaltung der Erfindung Sensoren zum automatisierten Koppeln der Koppeleinrichtung des fahrerlosen Transportfahrzeugs mit dem Königszapfen auf. Hierdurch kann beispielsweise die Sattelkupplung in einfacher Weise zum Königszapfen ausgerichtet und mit diesem gekoppelt werden. Hierzu wird insbesondere in Abhängigkeit der durch die entsprechenden Sensoren ermittelten Daten das fahrerlose Transportfahrzeug relativ zum Königszapfen bewegt. Es ist vorgesehen, dass die Sattelkupplung in Fahrzeugquerrichtung und/oder in Fahrzeuglängsrichtung relativbeweglich zum Aufbau/Gestell des fahrerlosen Transportfahrzeugs gelagert ist, um hierdurch die Kupplungsposition zwischen Sattelkupplung und Königszapfen zu erreichen.

Gemäß einer weiteren Ausführungsform weist die Umgebungserfassungseinrichtung zumindest einen Lasersensor beziehungsweise LIDAR-Sensor auf Diese LIDAR-Sensoren können sich am Ende des Teleskoparms befinden, um Hindernisse in der Nähe des Trailers erkennen können. Alternativ wären jedoch auch andere Technologieren zur Abstands - und/oder Geschwindigkeitsmessung, beispielsweise auf Radarbasis, denkbar.

In diesem Zusammenhang weist in einer weiteren Ausführungsform die Umgebungserfassungseinrichtung zumindest einen Ultraschallsensor auf. Derartige Sensoren sind besonders zuverlässig beziehungsweise ermöglichen eine besonders sichere Detektion der Umgebung. Außerdem weist bei einer besonders bevorzugten Ausführungsform die Umgebungserfassungseinrichtung zwei Lasersensoren und zwei Ultraschallsensoren auf. Hierdurch lässt sich das Umfeld des Gespanns/Sattelzugs besonders einfach und dennoch zuverlässig ermitteln.

Das hier beschriebene fahrerlose Transportfahrzeug weist insbesondere eine Koppeleinrichtung zum Koppeln, insbesondere zum automatisierten Koppeln, des fahrerlosen Transportfahrzeugs (FTF) mit einem Königszapfen eines Sattelaufliegers beziehungsweise eines sogenannten Trailers auf. Das flächenbewegliche fahrerlose Transportsystem kann somit insbesondere für den Transport eines Trailers auf einem Werksgelände verwendet werden. Dabei hebt das fahrerlose Transportsystem den Trailer am vorderen Ende an und kann ihn mit Hilfe der Räder am hinteren Ende des Trailers verfahren. Das fahrerlose Transportsystem nimmt den Trailer am Abstellort auf und bringt ihn automatisch zur gewünschten Werkshalle beziehungsweise eine Ablade- und/oder Beladestelle. Das fahrerlose Transportsystem kann dabei mit Hilfe von Sensoren Hindernisse in der Nähe der Plattform und des gegebenenfalls angehängten Sattelaufliegers erkennen und um diese gegebenenfalls herum fahren oder anhalten.

Vorzugsweise kann das fahrerlose Transportsystem Lasten bis zu 40 t, also beispielsweise einen Sattelauflieger mit 40 t, ziehen. Weiterhin ist das fahrerlose Transportfahrzeug in- und outdoorfähig und weist einen omnidirektionalen Antrieb auf.

Vorzugsweise weist das fahrerlose Transportfahrzeug weiterhin die neuste Sensor- und Navigationstechnik auf.

Das fahrerloses Transportsystem kann zum Zugbetrieb von unterschiedlichen Varianten von Sattelaufliegern eingesetzt werden, beispielsweise von Planenaufliegern, Kofferaufliegern, Tiefladeaufliegern, Containeraufliegern, Tankaufliegern.

Vorzugsweise weist die Koppeleinrichtung dabei eine Adaptereinheit zum form- und/oder kraftschlüssigen Verbinden mit dem Königszapfen des Sattelaufliegers auf. Insbesondere umfasst die Koppeleinrichtung eine Sattelkupplung mit einer Sattelplatte, welche von dem fahrerlosen Transportsystem getragen ist. Die Sattelkupplung dient dabei unter anderem einerseits zum Abstützen und Tragen des Trailers unter Vermittlung des Königszapfens, und andererseits zum Verriegeln des Königszapfens an der Sattelplatte. Insbesondere wird hierbei eine normierte Sattelkupplung und Sattelplatte eingesetzt, um möglichst viele gängige Sattelauflieger aufnehmen und rangieren zu können.

Weiterhin kann die Koppeleinrichtung eine Vorrichtung zum Anheben des Sattelaufliegers, insbesondere eine hydraulische Vorrichtung, aufweisen. Diese Vorrichtung kann beispielsweise zwischen der Sattelkupplung und dem Aufbau/Gestell des fahrerlosen Transportsystems angeordnet sein, so dass die Sattelkupplung (und damit einhergehend der vordere Bereich des Sattelaufliegers/Trailers) relativ zum Aufbau/Gestell des fahrerlosen Transportsystems angehoben und abgesenkt werden kann. Alternativ hierzu könnte das Fahrwerk des fahrerlosen Transportsystems auch mit einer Luftfederung oder dergleichen als besagte Vorrichtung versehen sein, wie dies üblicherweise auch bei Sattelzugmaschinen der Fall ist, so dass das Anheben und Absenken des vorderen Teils des Sattelaufliegers/Trailers durch Höhenverstellung des Aufbaus/Gestells des fahrerlosen Transportsystems und damit auch der Sattelkupplung erfolgt.

Gemäß einer weiteren Ausführungsform weist das fahrerlose Transportfahrzeug eine Mehrzahl von Antriebsrädern auf, welche derart ansteuerbar sind, dass das fahrerlose Transportfahrzeug omnidirektional bewegbar ist. Beispielsweise können mindestens zwei Antriebsräder mit unterschiedlichen Antriebsdrehmomenten und/oder gegenläufig orientierten Antriebsdrehmomenten und/oder gegenläufig orientierten Drehrichtungen beaufschlagt werden. Insbesondere weist das fahrerlose Transportsystem wenigstens eine Vorderachse und wenigstens eine Hinterachse beziehungsweise entsprechende, den Achsen zugeordnete Antriebsräder auf, die mit unterschiedlichen Antriebsdrehmomenten und/oder gegenläufig orientierten Antriebsdrehmomenten und/oder gegenläufig orientierten Drehrichtungen betreibbar sind.

Weiterhin wird ein Verfahren zum Bewegen eines Sattelaufliegers oder dergleichen Anhängers durch ein fahrerloses Transportfahrzeug angegeben. Dabei wird ein fahrerloses Transportfahrzeug, welches zumindest die Merkmale des Anspruchs 1 aufweist, mit einem Sattelaluflieger automatisch gekoppelt, wobei vorzugsweise eine Koppeleinrichtung des fahrerlosen Transportfahrzeugs mit dem Königszapfen des Handlauffliegers verbunden wird. Beispielsweise kann eine Adaptereinheit der Koppeleinrichtung eine form- und/oder kraftschlüssige Verbindung mit dem Königszapfen eingehen. Weiterhin kann der Sattelauflieger durch eine Vorrichtung zum Anheben, insbesondere eine hydraulische Vorrichtung, unmittelbar vor und/oder während und/oder unmittelbar nach dem Koppeln angehoben werden, sodass der Sattelauflieger durch das fahrerlose Transportfahrzeug bewegt werden kann.

Weiterhin wird ein Arm, insbesondere ein Teleskoparm vorgesehen, und insbesondere vom fahrerlosen Transportfahrzeug ausgefahren. Das Ausfahren des Teleskoparms kann insbesondere in axialer Richtung erfolgen, sodass die Umgebungserfassungseinrichtung nach dem Ausfahren einen größeren Abstand zum Grundkörper des fahrerlosen Transportfahrzeugs aufweist. Das Ausfahren des Teleskoparms kann vor und/oder während und/oder nach dem Koppeln des fahrerlosen Transportfahrzeugs mit dem Sattelauflieger erfolgen.

Durch das hier beschriebene fahrerlose Transportfahrzeug beziehungsweise durch das hier beschriebene Verfahren kann eine Detektion von Hindernissen am hinteren Ende Trailers erfolgen, sodass vorteilhafterweise Unfälle vermieden werden können.

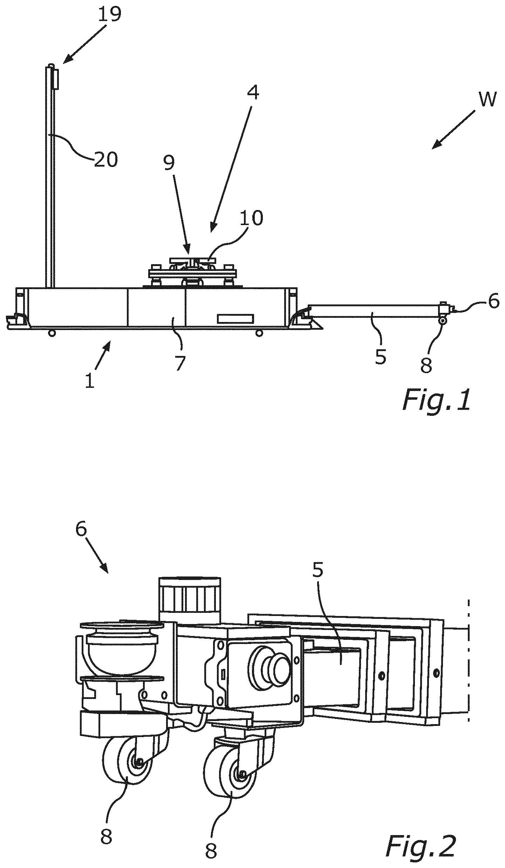

Weitere Vorteile und vorteilhafte Ausführungsformen des hier beschriebenen fahrerlosen Transportfahrzeugs und des Verfahrens zum Bewegen eines Sattelaufliegers durch ein fahrerloses Transportfahrzeug ergeben sich aus den im Folgenden in Verbindung mit den Figuren 1 bis 3 beschriebenen Ausführungsformen. Es zeigen:
- Fig. 1: eine schematische Darstellung eines fahrerlosen Transportfahrzeugs zum Bewegen eines Sattelaufliegers gemäß einem Ausführungsbeispiel,
- Fig. 2: eine schematische Darstellung eines Teleskoparms eines hier beschriebenen fahrerlosen Transportfahrzeugs gemäß einem weiteren Ausführungsbeispiel, und
- Fig. 3: eine schematische Darstellung eines fahrerlosen Transportfahrzeugs zum Bewegen eines Sattelaufliegers gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

Die Fig. 1 zeigt ein fahrerloses Transportfahrzeug 1 gemäß einem Ausführungsbeispiel. Das fahrerlose Transportfahrzeug 1 weist einen im Weiteren als Grundkörper 7 bezeichneten Aufbau beziehungsweise ein entsprechendes Gestell und einen vom Grundkörper 7 abragenden Teleskoparm 5 auf, der an einem dem Grundkörper 7 abgewandten Ende eine Umgebungserfassungseinrichtung 6 aufweist.

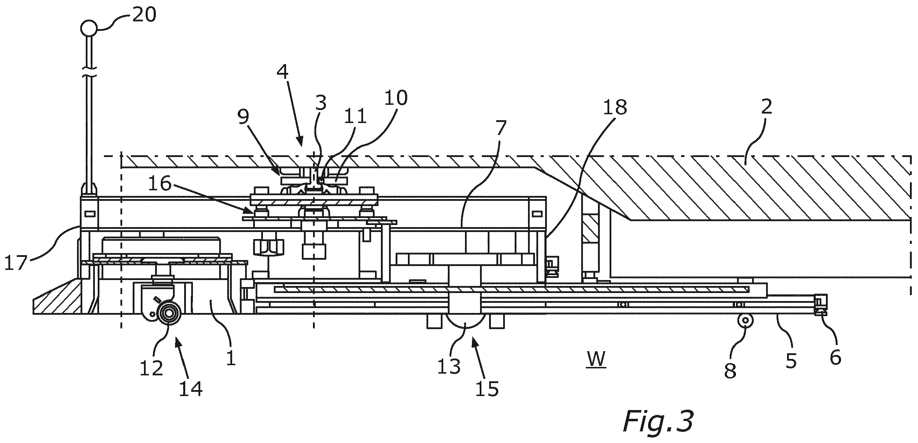

Dieses fahrerlose Transportfahrzeug 1 ist, wie dies aus Fig. 3 in einer schematischen Darstellung eines weiteren Ausführungsbeispiels erkennbar ist, mit einem angedeuteten Sattelauflieger 2 oder dergleichen Anhäger koppelbar beziehungsweise gekoppelt. Dabei ist eine Koppeleinrichtung 4 des fahrerlosen Transportfahrzeugs 1 mit einem Königszapfen 3 des Sattelaufliegers 2 verbunden.

Wie aus Fig. 1 zu erkennen ist, dient das fahrerlose Transportfahrzeug 1 zum Bewegen des Sattelaufliegers 2 insbesondere innerhalb eines Frachthofs oder derglichen Werksgeländes W. Es hat sich nämlich gezeigt, dass das bisherige Verfahren in Werksgeländen W, bei welchem jeweilige Sattelauflieger 2 beziehungsweise Trailer in Produktionswerken mit einer klassischen Zugmaschine transportiert werden, insbesondere aus wirtschaftlicher Sicht nicht sinnvoll ist. Diese Zugmaschinen sind nämlich für den Langstreckeneinsatz auf der Straße ausgelegt und sind bei Fahrten in Werksgeländen W, welche im Verhältnis zum Langstreckeneinsatz meist nur sehr kurz sind, nicht sehr effizient hinsichtlich des Energieverbrauchs. Zudem muss auf dem Werksgelände W oft rangiert werden; allerdings sind die Zugmaschinen nicht sehr wendig.

Aus diesem Grund wird vorliegend auf dem Werksgelände W anstelle einer Sattelzugmaschine das fahrerlose Transportfahrzeug 1 bereitgestellt, welches mit dem Sattelauflieger 2 automatisch gekoppelt werden kann. Hierzu weist das fahrerlose Transportfahrzeug 1 die in Fig. 3 erkennbare Koppeleinrichtung 4 auf, welche mit dem Königszapfen 3 des Sattelaufliegers 2 verbindbar beziehungsweise in Fig. 3 verbunden ist.

Wie aus Fig. 3 zudem zu erkennen ist, weist die Koppeleinrichtung 4 eine Adaptereinheit zum form- und/oder kraftschlüssige Verbinden mit dem Königszapfen 3 auf, die hier eine üblicher Weise eingesetzte Sattelkupplung 9 umfasst. Die Sattelkupplung 9 weist hierbei eine Sattelplatte 10 auf, welche vom Aufbau beziehungsweise Gestell, welche(r/s) hier im Weiteren als Grundkörper 7 des fahrerlosen Transportsystems 1 bezeichnet wird, getragen ist. In die Sattelplatte 10 ist eine Verriegelungseinrichtung 11 integriert, mittels welcher der Königszapfen 3 an der Sattelplatte 10 verriegelt werden kann. Die Sattelkupplung 9 dient somit unter anderem einerseits zum Abstützen und Tragen des Trailers 2 unter Vermittlung des Königszapfens 3, und andererseits zum Verriegeln des Königszapfens 3 an der Sattelplatte 10. Insbesondere wird hierbei eine normierte Sattelkupplung 9 und Sattelplatte 10 eingesetzt, um möglichst viele gängige Sattelauflieger 2 aufnehmen und rangieren zu können.

Weiterhin umfasst das fahrerlose Transportfahrzeug 1 eine Mehrzahl von Antriebsrädern, von welchen in den Fig. 1 und 3 jeweilige vordere und hintere Antriebsräder 12, 13 gezeigt sind. Diese sind hier derart ansteuerbar sind, dass das fahrerlose Transportfahrzeug 1 omnidirektional bewegbar ist. Beispielsweise können mindestens zwei Antriebsräder 12, 13 derart ausgebildet sein, dass sie mit unterschiedlichen Antriebsdrehmomenten und/oder gegenläufig orientierten Antriebsdrehmomenten und/oder gegenläufig orientierten Drehrichtungen beaufschlagt werden können. Insbesondere kann das fahrerlose Transportsystem 1 wenigstens eine Vorderachse 14 und wenigstens eine Hinterachse 15 beziehungsweise entsprechende, zugehörige Antriebsräder 12, 13 aufweisen, die mit unterschiedlichen Antriebsdrehmomenten und/oder gegenläufig orientierten Antriebsdrehmomenten und/oder gegenläufig orientierten Drehrichtungen betreibbar sind. Somit ist das fahrerlose Transportfahrzeug 1 beispielsweise omnidirektional in Fahrzeuglängsrichtung und Fahrzeugquerrichtung bewegbar. In einer besonderen Ausführungsform weist das fahrerlose Transportfahrzeug 1 eine Vorderachse 14 mit jeweiligen, angetriebenen und lenkbaren Vorderrädern 12 und zwei Hinterachsen 15 mit jeweiligen, angetriebenen und lenkbaren Hinterrädern 13 auf. Hierdurch ist der Sattelauflieger 2 besonders gut manövrierbar.

Es ist klar, dass im Rahmen der Erfindung auch andere Konfigurationen von angetriebenen und lenkbaren Rädern des fahrerlosen Transportfahrzeugs 1 denkbar sind. Dabei kann das fahrerlose Transportfahrzeug 1 auch starre und/oder nicht angetriebene Räder aufweisen.

Weiterhin umfasst das fahrerlose Transportfahrzeug 1 eine Vorrichtung 16 zum Anheben des vorderen Endes des Sattelaufliegers 2, so dass dieser mit Hilfe seiner Räder 14, 15 am hinteren Ende des Trailers 2 verfahren werden kann. Diese Vorrichtung 16 kann beispielsweise eine hydraulische Vorrichtung sein, mittels welcher unmittelbar vor und/oder während und/oder unmittelbar nach dem Koppeln des Königszapfens 3 mit der Sattelkupplung 9 der Trailer 2 angehoben werden kann, sodass dieser durch das fahrerlose Transportfahrzeug 1 bewegt werden kann. Gegebenenfalls wäre es, insbesondere zur Verbesserung der Wendigkeit des Trailers 2 und des Sattelzugs insgesamt, auch denkbar, dass durch einsprechende Steuerung/Beeinflussung wenigstens eine Achse beziehungsweise die entsprechenden Räder 14, 15 des Trailers 2 angehoben werden.

Gemäß Fig. 3 ist im vorliegenden Fall die hydraulische Vorrichtung 16 zwischen der Sattelkupplung 9 und dem Grundkörper 7 des fahrerlosen Transportsystems 1 angeordnet. Hierbei sind beispielsweise jeweilige Hydraulikelemente, beispielsweise Kolben-Zylinder-Elemente, zwischen der Sattelplatte 10 und dem Grundkörper 7 angeordnet, mittels welchen die Sattelplatte 10 relativ zum Grundkörper 7 in Fahrzeughochrichtung anhebbar und absenkbar ist.

Um ein automatisches Ankoppeln des Königszapfens 3 an der Sattelkupplung 9 zu erreichen, weist die Kopplungseinrichtung 4 beispielsweise jeweilige Sensoren zum automatisierten Koppeln mit dem Königszapfen 3 auf. Hierdurch kann beispielsweise die Position der Sattelkupplung 9 relativ zu dem Königszapfen 3 ermittelt werden. hierbei wäre es denkbar, die Sattelkupplung 9 in Fahrzeugquerrichtung und/oder in Fahrzeuglängsrichtung relativbeweglich zum Grundkörper 7 des fahrerlosen Transportfahrzeugs 1 zu lagern, so dass je nach mittels der Sensorik ermittelter Relativposition die Sattelkupplung 9 relativ zum Königszapfen 3 (fein) verstellt werden kann, bis die Kupplungsposition zwischen Sattelkupplung 9 und Königszapfen 3 erreicht ist. Ist insbesondere eine Grobverstellung zwischen Sattelkupplung 5 und Königszapfen 3 erforderlich, kann diese durch Verfahren des fahrerlosenTransportfahrzeugs 1 relativ zum Königszapfen 3 erfolgen. Gegebenenfalls kann die Positionierung der Sattelkupplung 9 relativ zum Königszapfen 3 auch ausschließlich durch Verfahren des fahrerlosenTransportfahrzeugs 1 durchgeführt werden. Nach erreichter Kupplungsposition zwischen Sattelkupplung 9 und Königszapfen 3, welche beispielsweise über eine entsprechende Sensorik erfasst wird, kann dann das automatische Verriegeln des Königszapfens 3 an der Sattelkupplung 9 mittels der Verriegelungseinrichtung 11 erfolgen.

Das Abkoppeln nach dem Rangieren des Trailers 1 kann in entsprechend umgekehrter Reihenfolge erfolgen, indem zunächst die Verriegelungseinrichtung 11 gelöst und dann durch Unterstützung mittels der Sensorik die Sattelkupplung 9 außer Eingriff mit dem Königszapfen 3 gebracht wird, indem beispielsweise das fahrerlose Transportfahrzeug 1 verfahren und/oder die Sattelkupplung 9 relativ zum Grundkörper 7 verfahren wird.

Alternativ zu der beschriebenen Vorrichtung zum Anheben der Sattelplatte 10 kann als Vorrichtung zum Anheben des vorderen Endes des Sattelaufliegers 2 auch das Fahrwerk des fahrerlosen Transportsystems 1 dienen. Hierbei wäre es beispielsweise denkbar, die jeweiligen Räder 12, 13 des fahrerlosen Transportfahrzeugs 1 über eine Luftfederung oder dergleichen am Grundkörper 7 abzustützen, so dass das Anheben und Absenken des fahrerlosen Transportsystems 1 und damit auch des vorderen Endes des Trailers 2 durch Höhenänderung jeweiliger Luftfedern oder dergleichen der Luftfederung vorgenommen werden kann.

In der Fig. 3 ist zudem in einer Detailansicht der Arm 5 dargestellt, der vom hinteren Ende des Grundkörpers 7 abragt. Im vorliegenden Fall ist der der Arm teleskopisch unter den Trailer 2 verfahrbar. Hierzu weist der Teleskoparm 5 an seinem hinteren beziehungsweise freien Ende zwei Stützräder 8 auf, welche beim Ausfahren des Teleskoparms 5 am Boden rollen. Während der Fahrt des fahrerlosen Transportfahrzeugs 1 dienen die Räder 8 zur Abstützung des Arms 5 und rollen somit entsprechend mit. Bei einem kürzeren Arm 5 kann gegebenenfalls auf die Räder 8 verzichtet werden. Bei einem längeren Arm 5 können gegebenenfalls auch über dessen Länge weitere Räder vorgesehen sein.

Anstelle eines teleskopartigen Verlängerns beziehungsweise Aus- und Einfahrens des Arms 5 wären natürlich auch andere gängige Ausfahr- und Einfahrmechanismen durch Klappen, Schwenken oder dergleichen verfahren entsprechender Teile des Arms denkbar.

Wie des Weiteren aus den Fig. 2 und 3 erkennbar ist, ist am Teleskoparm 5, insbesondere an dessen hinterem Ende, eine Umgebungserfassungseinrichtung 6 vorgesehen. Mittels des Arms 5 kann somit die Umgebungserfassungseinrichtung 6 im Bereich des Anhängers, insbesondere des Sattelaufliegers 2, positioniert werden. Hierbei wird der Arm 5 mit der daran angeordneten Umgebungserfassungseinrichtung 6 vorzugsweise unterhalb des Aufbaus beziehungsweise des Rahmens des Anhängers/Sattelaufliegers 2 positioniert. Durch den Arm 5 kann somit die Umgebungserfassungseinrichtung 6 in einem hinteren Teil des Gespanns/Sattelzugs positioniert werden, so dass auch die Umgebung im Bereich des Anhängers/Sattelaufliegers 2 (besser) detektiert werden kann. Somit können Hindernisse in der Nähe des Trailers 2 (besser) erkannt und das autonom fahrende Gespann beziehungsweise der Sattelzug besser um diese herum navigiert werden. Dies ist beispielsweise insbesondere bei Rückwärtsfahrten von großem Vorteil, da das fahrerlose Transportsystem bei Hindernissen rechtzeitig eingreifen oder stoppen und somit gefährliche Situationen vermeiden kann.

Vorzugsweise ist der Arm 5 so lange ausgebildet beziehungsweise ausfahrbar, dass die Umgebungserfassungseinrichtung 6 in Fahrzeuglängsrichtung zumindest auf Höhe oder hinter einer hintersten Achse des Trailers 2 positioniert ist und somit das hintere Ende des Trailers 2 frei detektieren kann.

Die Umgebungserfassungseinrichtung 6 weist hier zumindest einen Lasersensor beziehungsweise LIDAR-Sensor auf. Diese LIDAR-Sensoren können sich am Ende des Teleskoparms 5 befinden, um Hindernisse in der Nähe des Trailers erkennen können. Alternativ wären jedoch auch andere Technologieren zur Abstands - und/oder Geschwindigkeitsmessung, beispielsweise auf Radarbasis, denkbar.

Das fahrerlose Transportfahrzeug 1 weist außerdem eine Mehrzahl von Sensoren zur Umgebungserfassung auf. Beispielsweise kann das fahrerlose Transportfahrzeug 1 am Grundkörper 7 zumindest vier Lasersensoren oder dergleichen Sensoren aufweisen. Beispielsweise können jeweilige Sensoren an vier verschiedenen Ecken bzw. Kanten 17, 18 des Grundkörpers 7 des fahrerlosen Transportfahrzeugs 1 angeordnet sein. Das fahrerlose Transportsystem 1 kann dabei mit Hilfe der Sensoren Hindernisse in der Nähe des Fahrzeugs 1 und des gegebenenfalls angehängten Sattelaufliegers 2 erkennen und um diese gegebenenfalls herum fahren oder anhalten.

Das fahrerlose Transportfahrzeug 1 kann außerdem beispielsweise mittels einer Sende- und/oder Empfängereinheit 19, welche hier an einem Stützturm 20 angeordnet ist, mit einer zentralen Steuerung des Werksgeländes verbunden sein, um somit beispielsweise zu den entsprechenden Trailern 1 beziehungsweise den entsprechenden Ablade- und/oder Beladestellen geleitet zu werden.

Im vorliegenden Fall wird zum Bewegen des Sattelaufliegers 2 durch das fahrerlose Transportfahrzeug 1 zunächst das fahrerlose Transportfahrzeug 1 mit dem Sattelauflieger 2 oder dergleichen Anhänger gekoppelt und dann der Teleskoparm 5, insbesondere in einer axialen Richtung des Fahrzeugs ausgefahren, bevor der Anhänger/Sattelauflieger 2 durch das fahrerlose Transportfahrzeug 1 bewegt wird.

## Patentansprüche

1. Fahrerloses Transportfahrzeug (1) zum Bewegen eines Sattelaufliegers (2) oder dergleichen Anhängers aufweisend
- einen Grundkörper (7),
- einen vom Grundkörper (7) abragenden Arm (5) der an einem dem Grundkörper (7) abgewandten Ende eine Umgebungserfassungseinrichtung (6) aufweist, wobei der vom Grundkörper (7) abragende Arm (5) ein Teleskoparm (5), der teleskopartig ausfahrbar ausgebildet ist,
- eine Mehrzahl von Sensoren zur Umgebungserfassung und/oder zum automatisierten Koppeln der Koppeleinrichtung (4) des fahrerlosen Transportfahrzeugs (1) mit dem Königszapfen (3), **dadurch gekennzeichnet, dass** eine Koppeleinrichtung (4) mit einer Sattelkupplung zum automatisierten Koppeln des fahrerlosen Transportfahrzeugs (1) mit dem Königszapfen (3) eines Sattelaufliegers (2) vorgesehen ist, wobei die Sattelkupplung in einer Fahrzeugquerrichtung und/oder in einer Fahrzeuglängsrichtung relativbeweglich zu einem Aufbau/Gestell des fahrerlosen Transportfahrzeugs gelagert ist, wobei das fahrerlose Transportfahrzeug (1) einen im Wesentlichen quaderförmigen Grundkörper (7) aufweist, an welchem zumindest vier Sensoren angeordnet sind, wobei die Umgebungserfassungseinrichtung (6) zwei Lasersensoren und zwei Ultraschallsensoren aufweist.

2. Fahrerloses Transportfahrzeug (1) nach Anspruch 1,
wobei der Teleleskoparm (5) ausgebildet ist die Umgebungserfassungseinrichtung (6) in Fahrzeuglängsrichtung zumindest auf Höhe einer hinteren Achse des Sattelaufliegers (2) oder dergleichen Anhängers zu positionieren.

3. Verfahren zum Bewegen eines Sattelaufliegers (2) durch ein fahrerloses Transportfahrzeug (1) nach einem der Ansprüche 1 oder 2, aufweisend die folgenden Schritte:
- Bereitstellen eines fahrerlosen Transportfahrzeugs (1) gemäß einem der vorhergehenden Ansprüche,
- Bereitstellen eines zu bewegenden Sattelaufliegers (2),
- Koppeln des fahrerlosen Transportfahrzeugs (1) mit dem Sattelauflieger (2),
- Ausfahren des Teleskoparms (5), insbesondere in einer axialen Richtung, und
- Bewegen des Sattelaufliegers (2) durch das fahrerloseTransportfahrzeug (1).

## Claims

1. Driverless transport vehicle (1) for moving a semi-trailer (2) or similar trailer, comprising
- a base body (7),
- an arm (5) protruding from the base body (7) having an environment detection device (6) at an end facing away from the base body (7), wherein the arm (5) protruding from the base body (7) is a telescopic arm (5) designed to be telescopically extendable,
- a plurality of sensors for environment detection and/or for automated coupling of the coupling device (4) of the driverless transport vehicle (1) with the king pin (3), **characterized in that** a coupling device (4) with a fifth wheel coupling is provided for automated coupling of the driverless transport vehicle (1) with the king pin (3) of a semi-trailer (2), wherein the fifth wheel coupling is mounted relatively movable to a superstructure/frame of the driverless transport vehicle in a vehicle transverse direction and/or in a vehicle longitudinal direction, wherein the driverless transport vehicle (1) has a substantially cuboid-shaped base body (7) on which at least four sensors are arranged, wherein the environment detection device (6) comprises two laser sensors and two ultrasonic sensors.

2. Driverless transport vehicle (1) according to claim 1, wherein the telescopic arm (5) is designed to position the environment detection device (6) in the vehicle longitudinal direction at least at the height of a rear axle of the semi-trailer (2) or similar trailer.

3. Method for moving a semi-trailer (2) by a driverless transport vehicle (1) according to any one of claims 1 or 2, comprising the following steps:
- providing a driverless transport vehicle (1) according to any one of the preceding claims,
- providing a semi-trailer (2) to be moved,
- coupling the driverless transport vehicle (1) with the semi-trailer (2),
- extending the telescopic arm (5), particularly in an axial direction, and
- moving the semi-trailer (2) by the driverless transport vehicle (1).

## Revendications

1. Véhicule de transport sans conducteur (1) pour déplacer une semi-remorque (2) ou une remorque similaire, comprenant
- un corps de base (7),
- un bras (5) faisant saillie du corps de base (7) ayant un dispositif de détection d'environnement (6) à une extrémité opposée au corps de base (7), où le bras (5) faisant saillie du corps de base (7) est un bras télescopique (5) conçu pour être extensible de manière télescopique,
- une pluralité de capteurs pour la détection de l'environnement et/ou pour le couplage automatisé du dispositif de couplage (4) du véhicule de transport sans conducteur (1) avec le pivot d'attelage (3),
**caractérisé en ce qu'**un dispositif de couplage (4) avec une sellette d'attelage est prévu pour le couplage automatisé du véhicule de transport sans conducteur (1) avec le pivot d'attelage (3) d'une semi-remorque (2), où la sellette d'attelage est montée de manière relativement mobile par rapport à une superstructure/châssis du véhicule de transport sans conducteur dans une direction transversale du véhicule et/ou dans une direction longitudinale du véhicule, où le véhicule de transport sans conducteur (1) a un corps de base (7) de forme sensiblement cuboïde sur lequel sont disposés au moins quatre capteurs, où le dispositif de détection d'environnement (6) comprend deux capteurs laser et deux capteurs à ultrasons.

2. Véhicule de transport sans conducteur (1) selon la revendication 1, où le bras télescopique (5) est conçu pour positionner le dispositif de détection d'environnement (6) dans la direction longitudinale du véhicule au moins à la hauteur d'un essieu arrière de la semi-remorque (2) ou d'une remorque similaire.

3. Procédé de déplacement d'une semi-remorque (2) par un véhicule de transport sans conducteur (1) selon l'une quelconque des revendications 1 ou 2, comprenant les étapes suivantes:
- fournir un véhicule de transport sans conducteur (1) selon l'une quelconque des revendications précédentes,
- fournir une semi-remorque (2) à déplacer,
- coupler le véhicule de transport sans conducteur (1) avec la semi-remorque (2),
- étendre le bras télescopique (5), en particulier dans une direction axiale, et
- déplacer la semi-remorque (2) par le véhicule de transport sans conducteur (1).
